# EUROPÄISCHE PATENTSCHRIFT

(11) **EP 3 801 819 B1**
(45) Veröffentlichungstag und Bekanntmachung des Hinweises auf die Patenterteilung: **25.02.2026**
(21) Anmeldenummer: 19744612.3
(22) Anmeldetag: 11.05.2019
(51) Int. Cl.: B01D 45/06, B01D 45/08

(54) **TROPFENABSCHEIDER**
MIST ELIMINATOR
SÉPARATEUR DE GOUTTES

(30) Priorität: 24.05.2018 DE 102018004170
(43) Veröffentlichungstag der Anmeldung: 14.04.2021
(73) Patentinhaber: Munters Euroform GmbH, 52068 Aachen (DE)
(72) Erfinder: SCHMITZ, Jürgen, 52070 Aachen (DE); WANDRES, Peter, 52066 Aachen (DE); EICHHORN, Verena, 52353 Düren (DE)
(74) Vertreter: WSL Patentanwälte Partnerschaft mbB
(86) Internationale Anmeldenummer: PCT/DE2019/000139
(87) Internationale Veröffentlichungsnummer: WO 2019/223822

(56) Entgegenhaltungen:
- EP-A2- 0 281 981
- WO-A1-2016/134398
- WO-A1-99/28011
- DE-A1- 10 042 443
- DE-A1- 10 045 302
- DE-A1- 102004 045 608

## Beschreibung

Die vorliegende Erfindung betrifft einen Tropfenabscheider zur Flüssigkeitsabscheidung und/oder Feststoffpartikelabscheidung aus einer Gasströmung mit einem Gehäuse, das einen Einlassbereich für die flüssigkeits/feststoffpartikelbehaftete Gasströmung und einen Auslassbereich für die von Flüssigkeit und/oder Feststoffpartikeln befreite Gasströmung und für die Flüssigkeit und/oder Feststoffpartikel aufweist, und mit einer Vielzahl von im Strömungsweg der flüssigkeits/feststoffbehafteten Gasströmung angeordneten Funktionselementen.

Tropfenabscheider zur Flüssigkeits/Feststoffpartikelabscheidung aus einer Gasströmung sind bekannt. Bei vielen technischen Anwendungen kommt es vor, dass beispielsweise ein Flüssigkeitstropfen und/oder Feststoffpartikel enthaltender Luftstrom einen Strömungskanal durchströmt, wobei durch mehrfache Umlenkung des Luftstromes eine Abscheidung der Flüssigkeitstropfen und/oder Feststoffpartikel, in der Regel Wassertropfen, erfolgt. Die Umlenkung des Gasstromes wird hierbei durch Funktionselemente des Tropfenabscheiders bewirkt, die einen schlangenlinienförmigen Strömungsweg der Gasströmung erzeugen. Dabei bleiben die mitgeführten Flüssigkeitströpfchen und/oder Feststoffpartikel an den Funktionselementen bzw. Abscheidungselementen haften und gelangen von hier in einen Auslassbereich des Tropfenabscheiders, von wo sie abgeführt werden.

Ein Tropfenabscheider der eingangs beschriebenen Art ist aus der EP 0 281 981 A2 bekannt. Dieser Tropfenabscheider weist in Richtung des Gasströmungsweges eine erste Ebene von im Abstand voneinander angeordneten Strömungsumlenkelementen auf. Es folgt dann eine zweite Ebene von Flüssigkeitsauffang- und -ableitelementen, mit denen die Abscheidung der mitgeführten Flüssigkeitströpfchen stattfindet, die von dort in eine Rinne gelangen und aus dem Abscheider abgeführt werden. Die Strömungsumlenkelemente der ersten Ebene sind hierbei V-förmig ausgebildet, während die Flüssigkeitsauffang- und -ableitelemente der zweiten Ebene etwa die Form eines umgedrehten V besitzen.

Aus der EP 1 059 107 A1 ist eine Abscheideeinrichtung bekannt, die eine Agglomerationsvorrichtung umfasst, die zwei Reihen von versetzt zueinander angeordneten Stäben aufweist, welche von einer Gasströmung in einer schlangenlinienförmigen Bahn passiert werden.

Abscheider mit mehreren Reihen an Abscheideelementen sind zudem bekannt aus DE 100 42 443 A1, DE 10 2004 045 608 A1, WO 99/28011 A1 sowie DE 100 45 302 A1.

Der vorliegenden Erfindung liegt die Aufgabe zugrunde, einen Tropfenabscheider der eingangs beschriebenen Art zu schaffen, der sich bei möglichst geringem Druckverlust durch eine besonders gute Abscheidungsleistung mit geringer Bautiefe auszeichnet.

Diese Aufgabe wird erfindungsgemäß bei einem Tropfenabscheider der angegebenen Art dadurch gelöst, dass die Funktionselemente im Gasströmungsweg in Strömungsrichtung in drei oder mehr Ebenen angeordnet sind, von denen die in Strömungsrichtung erste Ebene eine Vielzahl von nebeneinander und im Abstand voneinander angeordneten reinen Strömungsumlenkelementen umfasst, die in Strömungsrichtung zweite und ggf. weitere Ebene eine Vielzahl von nebeneinander und im Abstand voneinander angeordneten ersten Flüssigkeits/Feststoffpartikelauffang- und -ableitelementen enthält und die in Strömungsrichtung letzte Ebene eine Vielzahl von nebeneinander und im Abstand voneinander angeordneten weiteren Flüssigkeits/Feststoffpartikelauffang- und -ableitelementen besitzt, wobei sich die versetzt zueinander angeordneten Funktionselemente der verschiedenen Ebenen in seitlicher Richtung mit einem Überdeckungsbereich eines Funktionselementes teilweise überlappen, und sich die Strömungsumlenkelemente der ersten Ebene sowie die ersten Flüssigkeits/Feststoffpartikelauffang- und -ableitelemente der zweiten und ggf. weiteren Ebenen mit ihren Rückseiten geneigt oder gekrümmt in Richtung auf die Mittellinie der Zwischenräumen zwischen den Funktionselementen der nächsten Ebene erstrecken.

Der erfindungsgemäß ausgebildete Tropfenabscheider weist somit mindestens drei hintereinander im Strömungsweg der flüssigkeits/feststoffpartikelbehafteten Gasströmung angeordnete Ebenen von Funktionselementen auf. Bei der ersten Ebene handelt es sich um reine Strömungsumlenkelemente, die nahezu keine Abscheidungs- und Flüssigkeits/Feststoffpartikelableitfunktion besitzen. Die nachfolgenden Ebenen weisen Funktionselemente auf, die als Flüssigkeits/Feststoffpartikelauffang- und -ableitelemente ausgebildet sind, d.h. die gewünschte Tropfen/Partikelabscheidung und Ableitung der abgeschiedenen Tropfen/Partikel durchführen.

Erfindungsgemäß sind daher mindestens zwei Ebenen zur Flüssigkeits/Feststoffpartikelabscheidung vorgesehen, so dass sich hier ein mehrfacher Abscheideeffekt ergibt. Damit die Funktionselemente der letzten Ebene eine effiziente Flüssigkeits/Feststoffpartikelabscheidung und -abführung durchführen können, ist erfindungsgemäß vorgesehen, dass die Rückseiten der Strömungsumlenkelemente der ersten Ebene und der Flüssigkeits/Feststoffpartikelauffang- und -ableitelemente der zweiten und ggf. weiteren Ebene entsprechende Leitfunktionen übernehmen, die die Gasströmung durch die Zwischenräume zwischen den Funktionselementen der zweiten und ggf. weiteren Ebene in die Abscheide- bzw. Auffangelemente der letzten Ebene bzw. zwischen diesen hindurch leiten. Es findet somit sowohl durch die Funktionselemente der zweiten und ggf. weiteren Ebene als auch durch die Funktionselemente der letzten Ebene eine Flüssigkeits/Feststoffpartikelabscheidung und Flüssigkeits/Feststoffpartikelableitung statt. Hierdurch wird insgesamt eine effiziente Abscheidung erreicht, obwohl die Funktionselemente im erfindungsgemäß ausgebildeten Abscheider versetzt angeordnet sind, so dass nur eine geringe Versperrung für die Gasströmung vorgesehen ist. Mit anderen Worten, die den Abscheider passierende Gasströmung passiert diesen mit einer nur gering ausgeprägten schlangenlinienförmigen Bahn. Andererseits sind die Funktionselemente der Ebenen so angeordnet, dass die Gasströmung den Abscheider nicht in einer geradlinigen Bahn passieren kann.

Trotz der erfindungsgemäß vorgesehenen relativ geringen Versperrung wird somit durch die nachgeschalteten beiden Abscheidestufen eine effiziente Abscheidung bei einem geringen Druckverlust erreicht. Hierdurch lassen sich Flüssigkeitstropfen abscheiden, die vorzugsweise in einer Größenordnung von 10-30 µm, insbesondere bei 20 µm, liegen. Speziell ist ein derartiger Abscheider als Schwallabscheider geeignet, mit dem ein in einer Gasströmung mitgeführter plötzlicher Flüssigkeitsschwall auf effiziente Weise abgeschieden werden kann.

Vorzugsweise kann durch Variation bzw. Einstellung der Abstände der einzelnen Ebenen und Funktionselemente des Tropfenabscheiders dieser an die jeweiligen Durchmesser der abzuscheidenden Tropfen bzw. Partikel angepasst werden.

Um eine effiziente Abscheidung der Funktionselemente der zweiten und ggf. weiteren sowie letzten Ebene zu erreichen, übernehmen die Rückseiten der Strömungsumlenkelemente der ersten Ebene und der Flüssigkeits/Feststoffpartikelauffang- und -ableitelemente der zweiten und ggf. weiteren Ebene entsprechende Strömungsleitfunktionen, die die Gasströmung durch die Zwischenräume zwischen den Funktionselementen der zweiten und ggf. weiteren Ebene und durch die Zwischenräume zwischen den Funktionselementen der letzten Ebene leiten, wobei die mitgeführten Flüssigkeitstropfen und/oder Feststoffpartikel von den Funktionselementen der verschiedenen Ebenen aufgefangen werden. Da sich die Funktionselemente der verschiedenen Ebenen nur geringfügig überlappen, entsteht ein geringer Druckverlust. Die als reine Umlenkungselemente ausgebildeten Funktionselemente der ersten Ebene beschleunigen die Gasströmung, wodurch die Abscheidung der Flüssigkeit und/oder Partikel in den nachfolgenden Ebenen erleichtert wird.

Vorzugsweise weisen die Rückseiten der Strömungsumlenkelemente und der ersten Flüssigkeits/Feststoffpartikelauffang- und -ableitelemente eine auf die Mittellinie der Zwischenräume zwischen den Funktionselementen der nächsten Ebene gerichtete Spitze auf. Grundsätzlich können die erwähnten Rückseiten geneigt oder gekrümmt ausgebildet sein, wenn sie ihre Leitfunktion in die Zwischenräume der nächsten Ebene erfüllen. Bevorzugt wird hierbei eine dachförmige Ausgestaltung der Rückseiten unter Ausbildung einer Spitze, die auf die Mittellinie der Zwischenräume gerichtet ist. Dies schließt andere Ausführungsformen nicht aus. So können beispielsweise auch bogenförmige Ausgestaltungen Anwendung finden.

Was die Strömungsumlenkelemente der ersten Ebene anbetrifft, so sind diese vorzugsweise rautenförmig ausgebildet. Hierbei wird die auf die Spitze der Raute auf der Anströmseite auftreffende Strömung geteilt und auf die beiden ersten benachbarten Flüssigkeits/Feststoffpartikelauffang- und -ableitelemente der zweiten Ebene geführt, von denen die Flüssigkeitstropfen und oder Feststoffpartikel aufgefangen und abgeführt werden. Die hiervon befreite Gasströmung gelangt entlang einer geneigt, vorzugsweise leicht gekrümmt ausgebildeten Rückseite des rautenförmigen Strömungsumlenkelementes zwischen den beiden Funktionselementen der zweiten Ebene hindurch und trifft geradlinig auf das Funktionselement der nächsten Ebene, wo ebenfalls die restlichen Flüssigkeitstropfen und/oder Feststoffpartikel abgeschieden und aufgefangen werden. Der Gasstrom wird dann entlang einer Rückseite des Funktionselementes der zweiten und ggf. weiteren Ebene zwischen den beiden Funktionselementen der letzten Ebene hindurch zum Auslassbereich des Tropfenabscheiders geleitet.

Die rautenförmigen Strömungsumlenkelemente der ersten Ebene erfüllen daher zwei Funktionen: Zum einen leiten sie die Gasströmung auf ein Funktionselement der zweiten Ebene und beschleunigen diese und zum anderen leiten sie die durch die Funktionselemente der zweiten Ebene umgelenkte Gasströmung auf das zugehörige Funktionselement der nächsten Ebene.

Die Flüssigkeits/Feststoffpartikelauffang- und -ableitelemente der zweiten und ggf. weiteren und letzten Ebene sind vorzugsweise als an der Anströmungsseite offene kastenförmige Aufnahmeelemente ausgebildet. Bei einer anderen Ausführungsform sind diese Funktionselemente in der Form eines umgekehrten V gestaltet. Es sind generell beliebige Formen denkbar, wenn nur ein Auffangbereich für abzuscheidende Flüssigkeitstropfen und/oder Feststoffpartikel vorhanden ist und die entsprechenden Rückseiten dieser Funktionselemente die vorstehend beschriebenen Leitfunktionen besitzen.

So können die Flüssigkeits/Feststoffpartikelauffang- und -ableitelemente der zweiten und ggf. weiteren Ebene beispielsweise auf ihrer Rückseite eine Umlenkungserhebung aufweisen, bei der es sich um einen kleinen Umlenkungszwickel handeln kann. Dieser Zwickel hat vorzugsweise eine Spitze, die auf die Mittellinie des Zwischenraumes der Funktionselemente der nächsten Ebene gerichtet ist.

Bei einer speziellen Ausführungsform sind die Rückseiten der Strömungsumlenkelemente der ersten Ebene konkav gekrümmt ausgebildet. Ferner weisen die Strömungsumlenkelemente vorzugsweise auf der Anströmseite einen Öffnungswinkel von 60 - 120°, insbesondere von 90°, auf.

Der hier beschriebene Tropfenabscheider ist insbesondere als kleine Baueinheit ausgebildet, die insbesondere hinter Wärmetauschern billiger Bauart Verwendung finden kann. Ein Anwendungsbeispiel sind Fahrzeugmotoren auf der Basis von Brennstoffzellen. Hier kann es während des Startens des Motors, aber auch während des Betriebes, zum Ausriss von Wassertropfen aus einer Austauschmembran kommen, die die Schaufeln einer nachgeschalteten Turbine schädigen und zu deren Ausfall führen können. Dies kann der erfindungsgemäß ausgebildete Tropfenabscheider verhindern.

Um den Tropfenabscheider möglichst klein auszubilden, ist erfindungsgemäß vorgesehen, dass im Gehäuse hinter der letzten Ebene ein zur Ableitung der von Flüssigkeit bzw. Feststoffpartikeln befreiten Gasströmung zur Seite hin dienender Raum vorgesehen ist. Hierbei wird die von Flüssigkeit bzw. Feststoffpartikeln befreite Gasströmung daher seitlich aus dem Gehäuse abgeführt.

Der Tropfenabscheider wird vorzugsweise horizontal angeströmt, und die abgeschiedene Flüssigkeit und/oder Feststoffpartikel werden durch Schwerkraft nach unten oder seitlich abgeführt. Hierzu kann eine geeignete Rinnenkonstruktion vorgesehen sein.

Die Erfindung wird nachfolgend anhand eine Ausführungsbeispiels in Verbindung mit der Zeichnung im Einzelnen erläutert. Es zeigen:
- Figur 1: zwei räumliche Ansichten eines Tropfenabscheiders mit einem seitlichen Einlassbereich und horizontaler Durchströmung; und
- Figur 2: eine schematische Draufsicht auf drei Ebenen der Funktionselemente des Tropfenabscheiders.

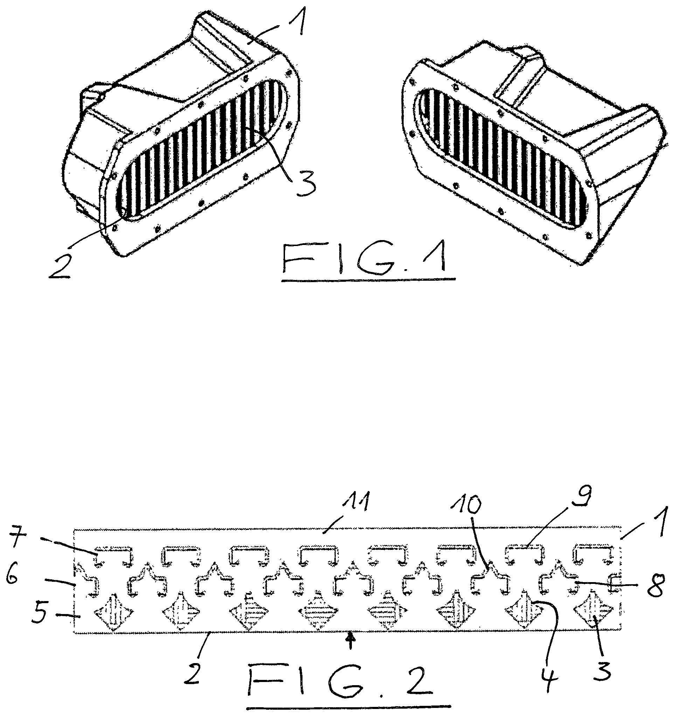

Der in Figur 1 in zwei räumlichen Ansichten dargestellte Tropfenabscheider besitzt ein Gehäuse 1, dessen Abmessungen beispielsweise 280 mm x 140 mm x 75 mm betragen. Auf einer Seitenfläche weist das Gehäuse 1 einen Öffnungsbereich 2 auf, über den sich in senkrechter Richtung eine Vielzahl von nebeneinander und im Abstand von einander angeordneten Strömungsumlenkelementen 3 erstreckt. Ein mit einer Flüssigkeit und/oder Feststoffpartikeln beladener Gasstrom dringt über den Öffnungsbereich 2 in den Tropfenabscheider ein und wird im Inneren desselben von der Flüssigkeit und/oder den Partikeln befreit. Der hiervon befreite Gasstrom und die Flüssigkeit und/oder die Partikel werden dann über geeignete Auslassbereiche (hier nicht gezeigt) aus dem Gehäuse abgeführt. Ein solcher Tropfenabscheider kann beispielsweise einem Wärmetauscher nachgeschaltet sein.

Die in Figur 2 dargestellte Draufsicht zeigt den Innenaufbau des Tropfenabscheiders. Der gezeigte Pfeil deutet die Strömungsrichtung der Gasströmung an. Die mit Flüssigkeit und/oder Partikeln beladene Gasströmung dringt über den schematisch angeordneten Öffnungsbereich 2 in das Gehäuse des Tropfenabscheiders ein und passiert in Gasströmungsrichtung nacheinander mindestens drei Ebenen 5, 6, 7 von Funktionselementen.

Die erste Ebene weist eine Vielzahl von nebeneinander und im Abstand von einander angeordneten rautenförmigen Strömungsumlenkelementen 3 auf, die eine reine Strömungsumlenkfunktion besitzen und die eindringende Gasströmung beschleunigen. Die im Schnitt rautenförmigen Strömungsumlenkelemente 3 weisen zwei leicht konkav gekrümmte Rückseiten 4 auf, die in einer Spitze zusammenlaufen, welche auf der Mittellinie der Zwischenräume der Funktionselemente 8 auf der zweiten Ebene 6 angeordnet sind. Die Funktionselemente der zweiten Ebene 6 sind als erste Flüssigkeits/Feststoffpartikelauffang- und -ableitelemente 8 ausgebildet. Im Einzelnen sind diese Funktionselemente im Schnitt kastenförmig gestaltet und weisen eine nahezu vollständig offene Anströmseite zum Auffangen der abgeschiedenen Flüssigkeitströpfchen und/oder Partikel auf. Auf der Rückseite dieser Funktionselemente der zweiten Ebene 6 befindet sich ein mit einer Spitze versehener Zwickel 10, der eine Leitfunktion ausübt und die Strömung in die Zwischenräume zwischen den Funktionselementen der nächsten gleichen oder letzten Ebene 7 leitet. Diese Funktionselemente sind ebenfalls als Flüssigkeits/Feststoffpartikelauffang- und - ableitelemente 9 ausgebildet und haben im Schnitt Kastenform mit nahezu vollständig offener Anströmseite.

Der Abscheider funktioniert in der folgenden Weise:
Die mit Flüssigkeit und/oder Feststoffpartikeln beladene Gasströmung dringt über den Öffnungsbereich 2 in das Abscheidergehäuse 1 ein. Sie trifft auf die rautenförmigen Strömungsumlenkelemente und wird hierdurch geteilt und gelangt über die offenen Anströmseiten in die benachbarten Flüssigkeits/Feststoffpartikelauffang- und -ableitelemente 8 der zweiten Ebene 6. Mithilfe von diesen Elementen 8 werden Flüssigkeitströpfchen und/oder Feststoffpartikel abgeschieden und in den Elementen 8 nach unten, d. h. senkrecht zur Zeichnungsebene, abgeleitet. Die umgelenkte Gasströmung wird dann entlang der gekrümmt ausgebildeten Rückseite 4 der Strömungsumlenkelemente 3 in den Zwischenraum zwischen den Elementen 8 der zweiten Ebene 6 (die ggf. mehrfach vorhanden sein kann) geführt und trifft auf die offene Anströmseite der Flüssigkeits/Feststoffpartikelauffang- und - ableitelemente 9 der dritten Ebene 7. Hier findet eine Abscheidung von weiteren Flüssigkeitströpfchen statt, die dann innerhalb der Elemente 9 nach unten abgeführt werden.

Die umgelenkte Gasströmung gelangt dann über die Rückseite der Elemente 8, die einen mit einer Spitze versehenen Zwickel 10 aufweist, in die Zwischenräume zwischen den Elementen 9 und von dort in seitlicher Richtung zum Auslassbereich der von Flüssigkeit befreiten Gasströmung.

Die Funktionselemente der mindestens drei Ebenen 5, 6 und 7 sind versetzt zueinander angeordnet und überlappen sich nur geringfügig, so dass nur eine geringfügige Versperrung des die Elemente passierenden Gasstromes auftritt. Hierdurch tritt nur ein geringer Druckabfall auf. Die Funktionselemente der zweiten und ggf. weiteren Ebene 6 und letzten Ebene 7 bewirken eine Abscheidung von Flüssigkeitströpfchen bzw. Feststoffpartikel in zwei aufeinander folgenden Ebenen, so dass trotz der nur geringfügigen Versperrung auf den Gasstrom ein sehr guter Abscheidungseffekt bei geringem Druckverlust erreicht wird. Ferner wird eine besonders geringe Bautiefe erreicht.

## Patentansprüche

1. Tropfenabscheider zur Flüssigkeitsabscheidung und/oder Feststoffpartikelabscheidung aus einer Gasströmung mit einem Gehäuse (1), das einen Einlassbereich (2) für die flüssigkeits-/feststoffpartikelbehaftete Gasströmung und einen Auslassbereich für die von Flüssigkeit und/oder Feststoffpartikeln befreite Gasströmung und für die Flüssigkeit und/oder Feststoffpartikel aufweist, und mit einer Vielzahl von im Strömungsweg der flüssigkeits-/feststoffpartikelbehafteten Gasströmung angeordneten Funktionselementen (3, 8, 9), wobei die Funktionselemente (3, 8, 9) im Gasströmungsweg in Strömungsrichtung in drei oder mehr Ebenen (5, 6, 7) angeordnet sind, von denen die in Strömungsrichtung erste Ebene (5) eine Vielzahl von nebeneinander und im Abstand voneinander angeordneten reinen Strömungsumlenkelementen (3) umfasst, die in Strömungsrichtung zweite Ebene (6) eine Vielzahl von nebeneinander und im Abstand voneinander angeordneten ersten Flüssigkeits-/Feststoffpartikelauffang- und -ableitelementen (8) enthält und die in Strömungsrichtung letzte Ebene (7) eine Vielzahl von nebeneinander und im Abstand voneinander angeordneten weiteren Flüssigkeits/Feststoffpartikelauffang- und -ableitelementen (9) besitzt, wobei sich die versetzt zueinander angeordneten Funktionselemente (3, 8, 9) der verschiedenen Ebenen (5, 6, 7) in seitlicher Richtung mit einem Überdeckungsbereich eines Funktionselementes (3, 8, 9) teilweise überlappen und sich die Strömungsumlenkelemente (3) der ersten Ebene (5) sowie die ersten Flüssigkeits-/Feststoffpartikelauffang- und -ableitelemente (8) der zweiten Ebene (6) mit ihren Rückseiten (4, 10) geneigt oder gekrümmt in Richtung auf die Mittellinien der Zwischenräume zwischen den Funktionselementen der nächsten Ebene erstrecken, **dadurch gekennzeichnet, dass** im Gehäuse (1) hinter der letzten Ebene (7) ein zur Ableitung der von Flüssigkeit und/oder Feststoffpartikeln befreiten Gasströmung zur Seite hin dienender Raum (11) vorgesehen ist, wobei der Raum ausgebildet ist, die von Flüssigkeit und/oder Feststoffpartikeln befreite Gasströmung seitlich aus dem Gehäuse abzuführen.

2. Tropfenabscheider nach Anspruch 1, **dadurch gekennzeichnet, dass** die Rückseiten, (4, 10) der Strömungsumlenkelemente (3) und der Flüssigkeits-/Feststoffpartikelauffang- und -ableitelemente (8) eine auf die Mittellinie der Zwischenräume zwischen den Funktionselementen der nächsten Ebene gerichtete Spitze aufweisen.

3. Tropfenabscheider nach Anspruch 1 oder 2 **dadurch gekennzeichnet, dass** die Strömungsumlenkelemente (3) im Schnitt rautenförmig ausgebildet sind.

4. Tropfenabscheider nach einem der vorangehenden Ansprüche, **dadurch gekennzeichnet, dass** die Flüssigkeits-/Feststoffpartikelauffang- und -ableitelemente (8, 9) als an der Anströmseite zumindest teilweise offene kastenförmige Aufnahmeelemente ausgebildet sind.

5. Tropfenabscheider nach einem der vorangehenden Ansprüche, **dadurch gekennzeichnet, dass** die Flüssigkeits-/Feststoffpartikelauffang- und -ableitelemente (8) der zweiten Ebene (6) auf ihrer Rückseite (10) eine Umlenkungserhebung aufweisen.

6. Tropfenabscheider nach Anspruch 5, **dadurch gekennzeichnet, dass** die Umlenkungserhebung als kleiner Umlenkungszwickel ausgebildet ist.

7. Tropfenabscheider nach einem der vorangehenden Ansprüche, **dadurch gekennzeichnet, dass** die Strömungsumlenkelemente (3) auf der Anströmseite einen Öffnungswinkel von 60- 120 Grad, insbesondere 90 Grad, besitzen.

8. Tropfenabscheider nach einem der vorangehenden Ansprüche, **dadurch gekennzeichnet, dass** die Rückseiten (4) der Strömungsumlenkelemente (3) konkav gekrümmt ausgebildet sind.

## Claims

1. Mist eliminator for separating liquids and/or solid particles from a gas flow, comprising a housing (1) which has an inlet region (2) for the gas flow containing liquid/solid particles and an outlet region for the gas flow freed of liquid and/or solid particles and for the liquid and/or solid particles, and with a plurality of functional elements (3, 8, 9) arranged in the flow path of the gas flow containing liquid/solid particles, wherein the functional elements (3, 8, 9) are arranged in the gas flow path in three or more planes (5, 6, 7) in the direction of flow, the first plane (5) in the direction of flow comprising a plurality of pure flow deflection elements (3) arranged next to one another and at a distance from one another, the second plane (6) in the direction of flow comprising a plurality of first liquid/solid particle collection and discharge elements (8) arranged next to one another and at a distance from one another, and the last plane (7) in the direction of flow has a plurality of further liquid/solid particle collection and discharge elements (9) arranged next to one another and at a distance from one another, wherein the function elements (3, 8, 9) of the different planes (5, 6, 7) ), which are arranged offset from one another, partially overlap in the lateral direction with an overlapping region of a functional element (3, 8, 9), and the flow deflection elements (3) of the first plane (5) and the first liquid/solid particle collection and discharge elements (8) of the second plane (6) extend with their rear sides (4, 10) inclined or curved in the direction of the centre lines of the spaces between the functional elements of the next plane, **characterised in that** a space (11) is provided in the housing (1) behind the last plane (7) for sidewards diverting the gas flow freed from liquid and/or solid particles, wherein the space is designed to divert the gas flow freed from liquid and/or solid particles sidewards out of the housing.

2. Mist eliminator according to claim 1, **characterised in that** the rear sides (4, 10) of the flow deflection elements (3) and the liquid/solid particle collection and discharge elements (8) have a tip directed towards the centre line of the spaces between the functional elements of the next plane.

3. Mist eliminator according to claim 1 or 2, **characterised in that** the flow deflection elements (3) are diamond-shaped in cross-section.

4. Mist eliminator according to one of the preceding claims, **characterised in that** the liquid/solid particle collection and discharge elements (8, 9) are designed as box-shaped receiving elements that are at least partially open on the inflow side.

5. Mist eliminator according to one of the preceding claims, **characterised in that** the liquid/solid particle collection and discharge elements (8) of the second plane (6) have a deflection elevation on their rear side (10).

6. Mist eliminator according to claim 5, **characterised in that** the deflection elevation is designed as a small deflection gusset.

7. Mist eliminator according to one of the preceding claims, **characterised in that** the flow deflection elements (3) have an opening angle of 60-120 degrees, in particular 90 degrees, on the inflow side.

8. Mist eliminator according to one of the preceding claims, **characterised in that** the rear sides (4) of the flow deflection elements (3) are designed to be concavely curved.

## Revendications

1. Séparateur de gouttes pour la séparation du liquide et/ou des particules solides d'un écoulement gazeux avec un boîtier (1) qui comporte une zone d'entrée (2) pour l'écoulement gazeux chargé en liquide/particules solides et une zone de sortie pour l'écoulement gazeux débarrassé du liquide et/ou des particules solides et pour le liquide et/ou les particules solides, et avec une pluralité d'éléments fonctionnels (3, 8, 9) disposés dans le trajet de l'écoulement gazeux chargé en liquide/particules solides, lesdits éléments fonctionnels (3, 8, 9) étant disposés dans le trajet de l'écoulement gazeux, dans le sens d'écoulement, sur trois niveaux ou plus (5, 6, 7), parmi lesquels le premier niveau (5) dans le sens d'écoulement comprend une pluralité d'éléments de déviation d'écoulement (3) purs disposés côte à côte et à distance les uns des autres, le deuxième niveau (6) dans le sens d'écoulement contient une pluralité de premiers éléments de collecte et d'évacuation du liquide/des particules solides (8) disposés côte à côte et à distance les uns des autres, et le dernier niveau (7) dans le sens d'écoulement possède une pluralité d'autres éléments de collecte et d'évacuation du liquide/des particules solides (9) disposés côte à côte et à distance les uns des autres, dans lequel les éléments fonctionnels (3, 8, 9) des différents niveaux (5, 6, 7) disposés de manière décalée les uns par rapport aux autres se chevauchent partiellement dans la direction latérale sur une zone de recouvrement d'un élément fonctionnel (3, 8, 9) et les éléments de déviation d'écoulement (3) du premier niveau (5) ainsi que les premiers éléments de collecte et d'évacuation du liquide/des particules solides (8) du deuxième niveau (6) s'étendent, par leurs faces arrière (4, 10), de manière inclinée ou incurvée en direction des lignes médianes des interstices entre les éléments fonctionnels du niveau suivant, **caractérisé en ce qu'un** espace (11) destiné à l'évacuation latérale de l'écoulement gazeux débarrassé du liquide et/ou des particules solides est prévu dans le boîtier (1) derrière le dernier niveau (7), ledit espace étant conçu pour évacuer latéralement l'écoulement gazeux débarrassé du liquide et/ou des particules solides hors du boîtier.

2. Séparateur de gouttes selon la revendication 1, **caractérisé en ce que** les faces arrière (4, 10) des éléments de déviation d'écoulement (3) et des éléments de collecte et d'évacuation du liquide/des particules solides (8) présentent une pointe orientée vers la ligne médiane des interstices entre les éléments fonctionnels du niveau suivant.

3. Séparateur de gouttes selon la revendication 1 ou 2, **caractérisé en ce que** les éléments de déviation d'écoulement (3) sont réalisés en forme de losange en section.

4. Séparateur de gouttes selon l'une quelconque des revendications précédentes, **caractérisé en ce que** les éléments de collecte et d'évacuation du liquide/des particules solides (8, 9) sont conçus sous la forme d'éléments de réception de type caisson ouverts au moins partiellement sur le côté amont.

5. Séparateur de gouttes selon l'une quelconque des revendications précédentes, **caractérisé en ce que** les éléments de collecte et d'évacuation du liquide/des particules solides (8) du deuxième niveau (6) présentent une saillie de déviation sur leur face arrière (10).

6. Séparateur de gouttes selon la revendication 5, **caractérisé en ce que** la saillie de déviation est réalisée sous la forme d'un petit coin de déviation.

7. Séparateur de gouttes selon l'une quelconque des revendications précédentes, **caractérisé en ce que** les éléments de déviation d'écoulement (3) présentent un angle d'ouverture de 60 à 120 degrés, en particulier de 90 degrés, du côté amont.

8. Séparateur de gouttes selon l'une quelconque des revendications précédentes, **caractérisé en ce que** les faces arrière (4) des éléments de déviation d'écoulement (3) sont réalisées avec une courbure concave.
